# EUROPEAN PATENT APPLICATION

(11) **EP 4 227 176 A1**
(43) Date of publication of application: **16.08.2023**
(21) Application number: 22155930.5
(22) Date of filing: 09.02.2022
(51) Int. Cl.: B60T 8/18, B60T 13/66, B60T 17/22

(54) **A SERVICE BRAKE CALIBRATION ARRANGEMENT OF A MINING MACHINE, A METHOD FOR CALIBRATING A SERVICE BRAKE OF A MINING MACHINE AND A MINING MACHINE**

(71) Applicant: Sandvik Mining and Construction Oy, 33330 Tampere (FI)
(72) Inventor: HAIKIO, Sami, 20101 Turku (FI); LANKILA, Kai, 20101 Turku (FI); AHO, Heikki, 20101 Turku (FI); SUOMI, Jussi, 20101 Turku (FI); LOPONEN, Petri, 20101 Turku (FI)
(74) Representative: Sandvik

(57) **Abstract**

A service brake calibration arrangement (1) of a mining machine (100) configured to determine a braking point of a service brake system comprising a brake circuit with a fluid source, conduit means for providing fluid to a brake actuator of a brake (2), a brake valve (8) for controlling pressure in the brake circuit, and a control device (9) configured to control the brake valve (8). The service brake calibration arrangement comprising:
a control system (CS) with at least one memory (122) configurated to store computer programs and related data, and at least one processor (124) configured to execute computer programs,
wherein the service brake calibration arrangement, by using the at least one processor and the at least one memory is configured to:
determine the braking point of the service brake valve (8), which braking point is a value of the pressure of the service brake circuit or a value of the control current of the brake valve (8) in which the mining machine (100) is detected to move when the braking force of the brake (2) of at least one wheel (20) of the mining machine (100) is gradually released by the brake valve (8) and when a torque produced by a powertrain of the mining machine (100) is connected to the at least one wheel (20) of the mining machine. The invention relates also to a method and to a mining machine.

## Description

This disclosure relates to mining machines. Particularly this disclosure relates to a service brake system of a mining machine.

Modern mining machines often have friction-based service brakes that are controlled by an electrically controlled brake system. The friction-based brakes are often operated by pressurised fluid in a brake circuit. The pressure of the fluid is controlled by a brake valve. In some vehicles the braking is achieved by increasing pressure of the fluid in the brake circuit. In some other brake systems, the pressure of the fluid is decreased for achieving a braking action. An example of this kind of brakes are spring-applied, hydraulically released (SAHR) brakes. Spring-applied, hydraulically released (SAHR) brakes means that brakes are fully applied when no pressure or low pressure of brake fluid exist in the brake circuit. The mining machines are heavy weight vehicles which are typically provided with spring-applied brakes for safety reasons. Such spring-applied hydraulically released brake systems (SAHR) are used in mine vehicles to provide automatic fail-safe braking on loss of vehicle power or hydraulic fluid pressure.

In modern mining machines the braking action may be made by a control device that controls the brake valve. In an embodiment the brake control device may be a brake pedal. In an embodiment the brake pedal may be an electrical brake pedal. The electrical brake pedal may be operationally electrically connected to the brake valve. The electrically controlled brake system often controls service brake valve proportionally. This may, according to one embodiment, reduce or increase pressure linearly in the brake circuit. In an embodiment the brake valve may be controlled by control current. A value of the control current may correspond to suitable pressure of the fluid in the brake circuit between the brake valve and the brake. Previously, the contact point where brake pads of the service brake system start to contact brake discs of the brakes was given to the control system by a fixed parameter value. However, this contact point i.e., pressure or current limit, does not always remain the same, and may not be exactly same between different machines. This may lead to situations in which actual braking may start at different brake pedal positions. The actual braking may vary, depending on brake system parts e.g., if they are worn or not, or on the machine. Therefore, brake feel and how fast the braking is started, may be different depending the point of braking i.e., when the braking starts, and the position of the brake pedal. These might also lead to unwanted additional delays in braking.

### OBJECTIVE OF THE INVENTION

An objective of the invention is to alleviate the disadvantages mentioned above and to provide a novel service brakes calibration arrangement.

Another further objective is to provide a method for calibrating service brakes of a mining machine.

Another further objective is to provide a mining machine with a service brakes calibration arrangement

### SUMMARY

The disclosure provides a service brakes calibration arrangement of a mining machine. The disclosure provides a method for calibrating service brakes of a mining machine. The disclosure provides a mining machine with a service brakes calibration arrangement.

According to a first aspect, the present invention provides a service brakes calibration arrangement of a mining machine.

According to the invention the service brake calibration arrangement of a mining machine is configured to determine a braking point of a service brake system comprising a brake circuit with a fluid source, conduit means for providing fluid to a brake actuator of a brake, a brake valve for controlling pressure in the brake circuit, and a control device configured to control the brake valve, wherein the calibration arrangement comprising:
a control system with at least one memory configurated to store computer programs and related data, and at least one processor configured to execute computer programs. The service brake calibration arrangement, by using the at least one processor and the at least one memory is configured to:
determine the braking point of the service brake valve, which braking point is a value of the pressure of the service brake circuit or a value of the control current of the brake valve in which the mining machine is detected to move when the braking force of the brake of at least one wheel of the mining machine is gradually released by the brake valve and when a torque produced by a powertrain of the mining machine is connected to the at least one wheel of the mining machine.

The technical effect is that by arranging an arrangement for calibrating the brake point of the service brake it may be possible to execute the calibration of service brakes without any additional devices in a work site. Furthermore, the braking may start more accurately. A further technical effect is that the braking may start always at the same control request i.e, the brake pedal position, or the automation controller request. Furthermore, a starting of braking immediately without additional delays may be achieved by the present calibration arrangement. This is an important factor for a control system to work most optimally. Also, as a result of use of the calibration arrangement the operator or user always may benefit an immediate and a similar braking effect in the same brake pedal position.

The service brake calibration arrangement is characterized by what is stated in the independent claim.

Some other embodiments are characterized by what is stated in the other claims.

Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

An embodiment may be based on actions in which a contact point of a brake may be calibrated by driving a machine against brakes (i.e. brakes on), and then slowly reducing a brake power or a braking force until the machine starts to move. This point then may be saved as a brake contact point. The service brake contact point may be a value of control current or pressure where the service brake valve control is started when the brake pedal is pressed (or where control request from automation system starts).

In an embodiment of the service brake calibration arrangement the service brake valve may be a proportional valve, and the braking point may be determined with a control current i.e., a braking current of the brake valve. By using the control current of the brake valve as a calibration result and as a measurable quantity in the arrangement, precise calibration result may be achieved without any additional sensors. Moreover, the control current of the brake valve may be easily used as a new calibrated brake point.

In an embodiment of the service brake calibration arrangement the control device configured to control the brake valve may be a brake pedal. This is the most useful way of controlling the brake valve in the calibration arrangement.

In an embodiment of the service brake calibration arrangement the brake valve may be configured to control pressure in the brake circuit between the brake valve and/or a relay valve and the brake actuator of the service brake.

In an embodiment of the service brake calibration arrangement the arrangement may comprise a measurement device, such as a sensor or an odometer, configured to give an indication when the mining machine is detected moving during calibration. An advantage is that the measuring device of the arrangement may be a sensor or an odometer of the mining machine. This means that no additional sensor is needed. However, it is possible to use additional sensor for giving an indication when the mining machine starts to move during the calibration.

In an embodiment of the service brake calibration arrangement the arrangement comprises a display device and/or a speaker for giving instructions or status information of the mining machine to an operator. An advantage is that the arrangement may use displays of the mining machine or terminal device of the operator for giving instructions or status information of the mining machine to the operator. In an embodiment the arrangement may have a speaker or may use of devices of the operator for transmitting instructions or status information of the mining machine.

According to a second aspect the present invention provides a method for calibrating of a service brakes of a mining machine. According to the invention the method comprising a step of holding the service brake on for holding the mining machine still,
connecting a power of a powertrain of the mining machine to produce a torque to at least one wheel of the mining machine,
gradually releasing the brake force of the service brake,
detecting a movement of the mining machine,
determining a braking point in which the mining machine is detected moving, and
setting up the braking point in which the mining machine is detected moving as a new calibrated braking point. An advantage is that by using the method for calibrating the brake point of the service brake it may be possible to execute the calibration of service brakes without any additional devices in a work site. Furthermore, as a result of the calibration the braking may start more accurately. A further technical effect is that the braking may start always at the same control request i.e, the brake pedal position, or the automation controller request. Furthermore, a starting of braking immediately without additional delays may be achieved by the present calibration arrangement. This is an important factor for a control system to work most optimally. Also, as a result of use of the calibration method the operator or user always may benefit an immediate and a similar braking effect in the same brake pedal position.

In an embodiment of the method the braking point determined may be a value of a braking current of a brake valve of a service brake system. An advantage is that the braking current of the brake valve is an exact and easily utilised quantity for determining. In an embodiment the braking current is a control current of the brake valve.

In an embodiment the method may further comprise a calibration of a control device, such as a brake pedal, operationally connected to the brake valve of the service brake system. An advantage is that by calibrating the control device, such as the brake pedal, an accurate and same braking point and braking feel may be achieved to the operator.

In an embodiment of the method the method may comprise calibration of each of the brake valves of the service brake system. An advantage is that with the same method, and by utilising the arrangement, several brake valves of the brake system may be calibrated. A further advantage is that by calibrating each of the brake valves a good braking balance between the brakes may be maintained or achieved.

In an embodiment the method, in case of a plurality of service brake valves, may further comprise a step of setting service brakes off, i.e. released, of those service brakes operationally connected to be controlled by other brake valves than the brake valve operationally connected to a service brake intended to be calibrated. An advantage for this is that by releasing other brakes they do not hamper the calibration of the brake valve of the brake to be calibrated.

In an embodiment in the method by using a control system with at least one processor and at least one memory and at least one measurement device may be configured to: determine the braking point of the brake valve. An advantage is that a control system may be used in calibration. The calibration procedure and its instructions to the operator may be arranged in the memory of the control system. In an embodiment the calibration process may be automated by the control system.

In an embodiment the method may comprise a step of instructing an operator of the mining machine to execute at least one or several of the following steps: controlling of a throttle or an acceleration of the powertrain of the mining machine, approving the result of the calibration on service brake before the result is stored as a new calibrated value in the memory. An advantage is that the operator of the mining machine may control the results of the calibration before they are stored as new calibrated values in the memory of the control system. Further advantage is that the operator may have a control of the calibration procedure.

In an embodiment the method may comprise a step of repeating calibration for each of the brake valves operationally connected to at least one service brake until the calibration of all brake valves intended to be calibrated is finished. An advantage is that the calibration method may be easily adapted for different brake systems, with different number of brake valves.

According to a third aspect the present invention provides a mining machine. According to the invention the mining machine comprises a service brake arrangement according to any one of embodiments mentioned above or below. An advantage is that by the service brake arrangement it is possible for an operator easily to calibrate the service brakes on a work site without any additional devices. This may be an important factor for usability, because the mining machines may be normally used on worksites away from such a devices.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** is a block diagram of an example of a mining machine with a service brake calibration arrangement,
**Figure 2** is a simplified diagram of a first embodiment of a service brake arrangement,
**Figure 3** is a simplified diagram of a second embodiment of a service brake arrangement,
**Figure 4** is a simplified diagram of an embodiment of a service brake arrangement,
**Figure 5** is a flow chart of an embodiment according to a first example of a method,
**Figure 6** is a flow chart of an embodiment of a second example of a method.

In the figures, some embodiments are shown simplified for the sake of clarity. Similar parts are marked with the same reference numbers in the figures.

### DETAILED DESCRIPTION

Reference will now be made in detail to the examples which are illustrated in the accompanying drawings.

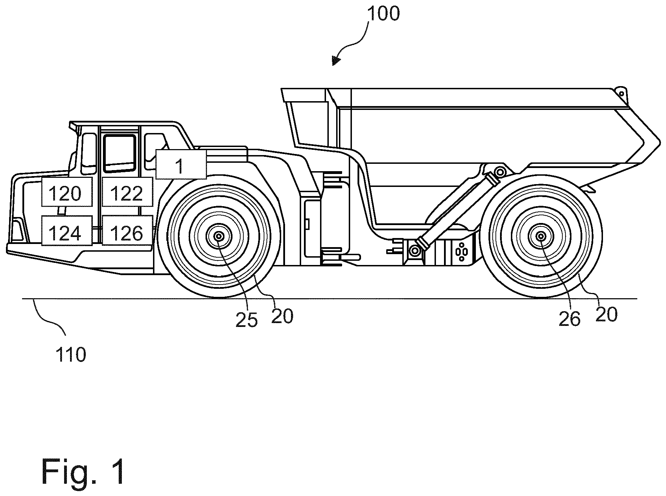

According to an aspect of the invention, a service brake calibration arrangement described in this description may be arranged in a vehicle. In an embodiment the vehicle may be a work machine. In an embodiment the vehicle may be an underground mining machine. In an embodiment the work machine may be a mining machine 100. In an embodiment the work machine may be an underground mining machine. According to an aspect of the invention a method for calibration of service brake may be achieved with a work machine. The work machine may be a mining machine, or a construction machine, e.g., a rock drilling rig, a development drill, a tunneling drilling machine, a surface drilling machine, a bolting or reinforcing vehicle, a rock removal machine, a longhole drill rig, an explosive charging machine, a loader, a transport vehicle, a loading or hauling machine, setting vehicles of gallery arcs or nets, a concrete spraying machine, a crusher, or a measuring vehicle. Figure 1 shows one example of a mining machine 100. The mining machine may be a mining vehicle. In an embodiment the mining machine 100 may be equipped with a dumb bed. The drive equipment may comprise one or more drive motors and one or more power transmission means for transmitting drive power to one or more wheels 20. The drive power transmission may comprise a mechanical gear system and mechanical power transmission members or, alternatively, the drive power transmission may be hydraulic or electric. In an embodiment the drive motor may be a hub motor.

In the figure 1 the mining machine comprises a front axle 25 provided with front wheels and a rear axle 26 provided with rear wheels. The number of wheels 20 may vary and instead of wheels, there may be different kind of mechanism for moving, for example a track arrangement. In an embodiment the wheels 20 may be provided with brakes 2, which may be connected to a brake circuit. In an embodiment the brake circuit may be a fluid actuated brake circuit. In an embodiment fluid may be a hydraulic fluid. In an embodiment the brake circuit may be a hydraulic brake circuit. The mining machine may also comprise a main power unit in connection of which may be a main hydraulic pump for generating hydraulic pressure for a hydraulic system of the mining machine 100. During normal operation of the mining machine the hydraulic pressure generated by the hydraulic pump may be conveyed to the brake system. In an embodiment the wheels 20 may be provided with spring-activated and hydraulically released brakes (SAHR-brakes), which are connected to a brake circuit.

Figure 1 discloses an example of a mining machine with a service brake calibration arrangement 1. The mining machine 100 may be arranged on a level ground 110 for the service brake calibration. The mining machine 100 of the example may be a conventional mining machine with a conventional power train comprising a combustion engine and a gear box. The mining machine 100 of the example of Fig. 1 may be manually driven by a human operator. However, instead of a traditional machine a more modern machines with an electric powertrain may be used. Furthermore, the driving may be partially or fully automated. Thus, instead of a mining machine of the Fig. 1 the mining machine may be an autonomous electric mining machine, an electric mining machine driven by a human operator or any similar arrangement. The mining machine may be provided with a service brake system.

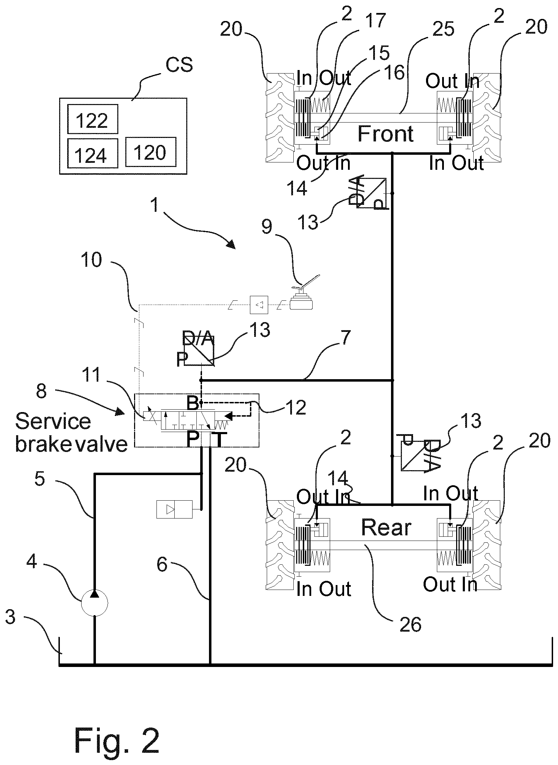

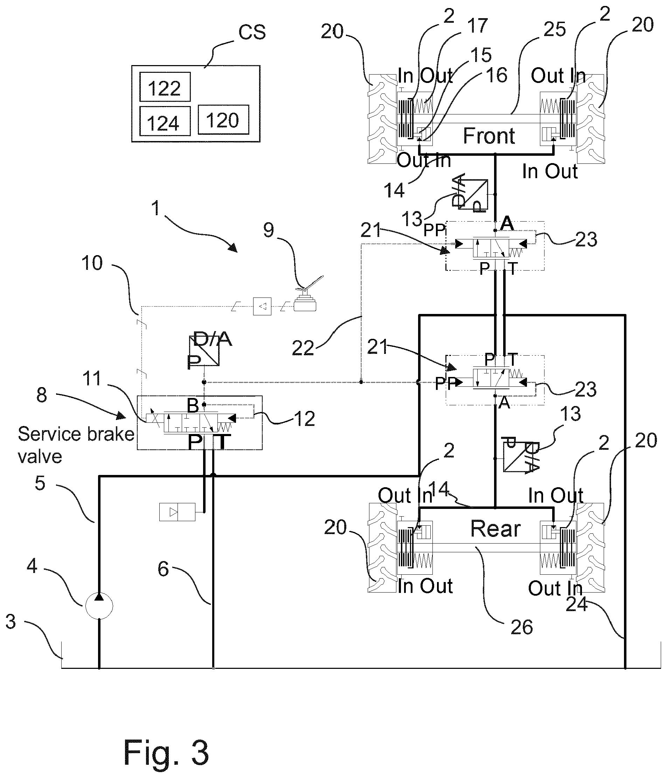

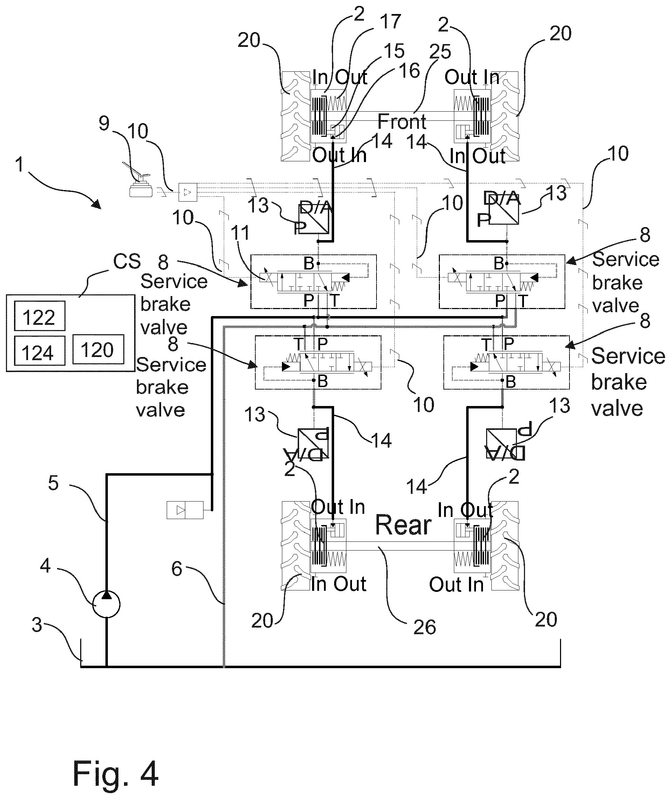

In an embodiment the mining machine may be provided by friction-based service brakes. Examples of schematically illustrated simplified brake systems of the mining machine are disclosed in Figure 2, in Figure 3, and in Figure 4. In an embodiment the service brakes 2 may be controlled by an electrically controlled brake system. The service brakes 2 may often be operated by pressurised fluid in a brake circuit. The pressure of the fluid in the brake circuit may be controlled by a brake valve 8. In an embodiment the fluid of the brake system may be hydraulic fluid. In an embodiment the brake valve 8 may be arranged to control the pressure in the brake circuit by opening a path for pressurized fluid to a conduit 7, 14 of the brake circuit between the brake valve 8 or a relay valve 21 (Fig. 3) and the service brake 2. In an embodiment the brake valve 8 may be arranged to control the fluid pressure in the brake circuit by decreasing fluid pressure in the brake circuit by opening a path for pressurized fluid from the brake circuit between the brake valve 8 and the service brake 2 to a tank conduit 6, 24.

In an embodiment of some vehicles, the braking may be achieved by increasing pressure of the fluid in the brake circuit. In an embodiment the braking power may be decreased by decreasing pressure of the fluid in the brake circuit.

In some other brake systems, the pressure of the fluid is decreased in the brake circuit for achieving a braking action.

In an embodiment the pressure of the fluid is increased for releasing the service brakes. An example of these kind of service brakes are spring-activated and hydraulically released service brakes (SAHR-brakes) . In figure 2 in connection with the wheels 20 may be brake assemblies i.e service brakes 2. The service brakes may comprise at least one spring 17 for connecting service brakes and at least one release actuator 16 for disconnecting the service brakes. In an embodiment the release actuator 16 may be a fluid powered actuator. In an embodiment the fluid is hydraulic fluid. In an embodiment of the brake circuit fluid may be gas or a mixture of gas and liquid. The service brakes may comprise disc-like braking elements for generating braking forces, or alternatively, the service brakes may comprise brake shoes, for example. The service brake assemblies may be connected to a brake circuit, which comprises at least one pressure source and at least one brake controller. The pressure source may comprise a connection to a main hydraulic system of the mining machine, or it may comprise a dedicated pump. The brake controller may be located in the control cabin whereby an operator may control operation of the release actuators. In an embodiment the fluid source may be a tank 3. The fluid is pressurized with a pressure generator such as a pump 4. The fluid may be arranged to be pressurized and conveyed by the pump 4 in a conduit 5 from the tank 3 to the brake valve 8. From the brake valve 8, depending on the state of the brake valve 8, the fluid may be conveyed via a conduit 7 and a conduit 14 to the service brakes 2. In an embodiment when the control device 9, such as a brake pedal, controls the valve electrically, for example via a control line 10 and a solenoid 11, the brake valve 8 may increase or decrease fluid pressure in the circuit, in conduits 7 and 14 between the brake valve 8 and in the brake actuator cylinder 15 of the service brake 2. In an embodiment the brake valve 8 may have a control line 12, for hydraulic control. In an embodiment the brake valve 8 may have a spring for returning a valve position. In an embodiment the brake valve 8 may be controlled by control current. In an embodiment control current may correspond to fluid pressure in the brake circuit. The brake circuit may be provided with at least one pressure sensor 13. In an embodiment of figure 2 the brake circuit may be provided with a plurality of pressure sensors 13. In an embodiment a first pressure sensor may be arranged in the brake circuit near the front axle 25 service brakes and a second pressure sensor near to the rear axle 26 brakes.

In an embodiment the braking action may be made by a control device that controls the brake valve 8. In an embodiment the brake control device 9 may be a brake pedal. In an embodiment the brake pedal may be an electrical brake pedal. The control device, such as the brake pedal, may be operationally electrically connected to the brake valve 8. The electrically controlled brake system may often control service brake valve 8 proportionally. The brake valve 8 may, according to one embodiment, reduce or increase pressure in the brake circuit. In an embodiment the brake valve 8 may linearly reduce or increase pressure in the brake circuit. In an embodiment the brake valve 8 may be controlled by control current. A value of the control current may correspond to suitable pressure of the fluid in the brake circuit between the brake control valve 8 and the service brake 2.

In an embodiment the brake system may be divided into two separate circuits, front and rear axle brake circuits. In an embodiment service brakes may be spring- applied hydraulically released (SAHR) type, which means that service brakes are fully applied when no pressure or low pressure exist in the brake circuit. The mine vehicles may be heavy weight vehicles which are typically provided with spring-applied service brakes for safety reasons. Such spring-applied hydraulically released brake systems (SAHR) are used in mine vehicles to provide automatic fail-safe braking on loss of vehicle power or hydraulic fluid pressure.

In figure 3 is disclosed schematically a simplified embodiment of a service brake system. In addition to brake circuit of figure 2 this system may have a relay valve 21 operationally arranged in the brake circuit between a brake valve 8 and a brake release actuator 16. In an embodiment of figure 3 may be arranged a plurality of relay valves 21. In an embodiment of figure 3 may be arranged two relay valves 21. The relay valves 21 may be arranged to enable high enough flow of fluid to and from the service brakes 2. In an embodiment the relay valve 21 may be arranged in the brake circuit between the service brake 2 and the tank 3. In figure 3 the brake valve 8 and the relay valves 21 are in a position in which pressure may be decreased in the brake circuit between the brake valve 8 and/or relay valves 21 and the service brakes 2. In an embodiment the relay valve 21 may be arranged to receive pilot pressure from a pilot pressure line 22 from the brake valve 8.

In figure 4 is disclosed schematically a simplified embodiment of a service brake system. In this system may have a plurality of brake valves 8. In an embodiment brake valves may be arranged for each of the service brakes of the wheels 20. In an embodiment the control system may be arranged to control each of the brake valves 8. In an embodiment a control device 9, such as a brake pedal, may be arranged to control each of the brake valves 8. In an embodiment of figure 4 power train of the machine may comprise a hub motor (not shown in fig 4) for each of the wheels 20. From the controller 9 may be arranged a control line 10 for each of the brake valves 8.

In an embodiment mining machine service brakes 2 may be controlled with a service brake valve 8, that affects to brake circuit. This service brake valve 8 may be controlled by a control system CS. The control system CS may comprise at least one processor 122 and at least one memory 124. The control system may further comprise at least one measurement device 120. The measurement device may comprise an odometer, a sensor or similar. The control system may comprise further a second measurement device 13. The second measurement device 13 may be a pressure sensor, pressure indicator or similar.

The at least one memory 124 comprises information about different factors for calibration for an electrically controllable service brake system of the mining machine 100. The information may be used by the at least one processor 122, which is configured to execute a method for calibration the service brake. This may be performed independently or with help of other assistant systems.

Instead of using the odometer, it may be possible to use different means to detect if the mining machine 100 is moving or not. There may be a separate sensor that provides the position of the mining machine directly. There may be a sensor that detects rotation of the wheel of the mining machine. The above-described means are only presented as examples and also other suitable tools for detecting a movement of the machine.

When service brake point has been acquired the processor may compute, using all parameters retrieved from the memory, an output comprising the brake current. The output may further comprise a pressure of a fluid in a service brake circuit. The output may further comprise pressures of the different brake actuator cylinders 15 of release actuators 16.

In an embodiment of the calibration arrangement and method a contact point of a service brake is calibrated by driving the mining machine against service brakes, and slowly reducing the brake force (raising brake circuit pressure by increasing service brake valve control) until machine starts to move. In an embodiment this point i.e. a value of the pressure or value of the brake valve control current may be saved as a contact point of a service brake. This value may be the point where service brake valve control is started when the control device 9 such as the brake pedal is pressed. (or where control request from automation system starts).

Braking starts more accurately always at the same control request (brake pedal position or automation controller request). Starting braking immediately without additional delays is important for system to work most optimally. Also, it gives user immediate and similar braking effect always at the same brake pedal position.

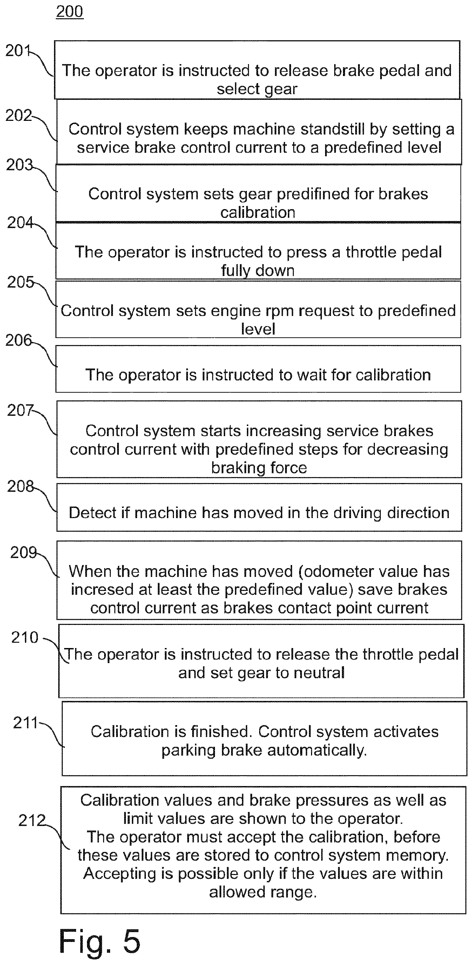

### Example 1: Service brake system calibration with one brake valve 8 (Figure 5)

In an embodiment of the service brake calibration system it is an intention to calibrate a service brake control current of a brake valve 8 at level where service brakes start to contact brake discs or brake drums. The calibration must not start until parking brakes of the mining machine are released. The operator may be informed to park the mining machine in level ground and release the parking brakes. In an embodiment *"Front brakes pressure"* and *"Rear brakes pressure"* - sensors may be arranged. In an embodiment the calibration is cancelled, if the parking brake is engaged or the brake pedal is pressed *(Brake control request* is above 0%) while calibration control is ongoing. In an embodiment functions interfering the brakes calibration procedure, such as neutral brake or hill hold, needs to be disabled during the calibration.

The calibration may be started by the operator action. In an embodiment the calibration may be cancelled, and reason shown, if any step takes more time than is set in a predefined parameter *"brake calibration step timeout",* or interlock conditions are not in a satisfactory state (i.e. ok) anymore.

In an embodiment in which in the machine may have different user right levels the service brakes calibration should be possible to do by operator's rights.

An embodiment of a calibration procedure 200 and the operator actions are disclosed in Figure 5:
The operator is instructed in step 201 to release the brake pedal and select a gear forward or backward *(Gear forward* or *Gear reverse-* inputs)

In step 202 the control system keeps machine standstill by setting service brake control current to a predefined level. In an embodiment a parameter *"Service brake control"* is set off. In an embodiment the service brake control current of a brake valve 8 may be set to a predefined value, for example to a minimum value, wherein the control current may be set, for example, to a value of 0 mA.

In an embodiment when the operator activates the gear, transmission stall mode may be activated to allow gear when service brake is on.

In step 203 the control system may set a gear predefined for service brakes calibration. In an embodiment the control system may set *"Gear request"* based on the predefined parameter *"Brakes calibration gear"* to the selected gear's direction.

The calibration process may have checking steps for example: move to a next step when gear is selected and brake pedal is released *(Brake control request =* 0%). This step may have a timeout step: timeout: "Gear is not selected" or "Brake pedal is not released" => Cancel calibration and show reason. The information and status may be shown to the operator on a display during the calibration process.

In step 204 the operator is instructed to press a throttle pedal fully down.

In step 205 the control system sets an engine rpm request (revolutions per minute request) to a predefined level. In an embodiment the control system may have a predefined limit *"Brakes calibration engine RPM".* In an embodiment the control system may set the engine rpm request level + 100 revolutions per minute, when a variable "Throttle *pedal position"* is detected to be more than a predefined limit "Throttle *pedal pressed limit".*

The calibration process may have checking steps, for example: move to a next step when engine RPM is above the predefined *"Brakes calibration engine RPM"* - limit.

Also, a timeout step may be arranged: Timeout: "Throttle pedal was not pressed fully down" / "Engine rpm was too low" or gear is set back to neutral => Cancel calibration and show the reason to the operator.

In step 206 the operator is instructed to wait for calibration.

In step 207 the control system starts increasing the service brakes control current with predefined steps for decreasing braking force and increasing braking pressure in the brake circuit between the brake valve 8 or the relay valve 21 and the service brakes 2. In an embodiment a value of a variable *"Service brake control"* may be increased, for example linearly and/or gradually. In an embodiment the service brake control current may be increased from minimum current with a parameter *"Brakes calibration step size"* divided by a parameter *"Brakes calibration interval" time.*

In step 208 is detected when the mining machine has moved. In an embodiment a measuring device or a sensor may be arranged to detect the movement. In an embodiment a movement in a main moving direction of the mining machine may be detected. In an embodiment an odometer may be arranged to detect the movement. In an embodiment the machine may be detected being moved if a predefined value is reached. In an embodiment the machine is detected moving if a variable **"Odometer** value" has increased more than a predefined *"Brakes calibration movement"* - limit. According to step 209 if the machine is detected being moved a value of the variable ***"Service brake control"** current* at this point **is saved** as *"Brakes contact point current".*

In an embodiment a timeout step may be arranged: "Machine movement is not detected, speed sensor failure" or the throttle pedal is lifted or the gear is set back to neutral or the brake pedal is pressed => Cancel calibration and show reason to the operator.

In step 210 the operator is instructed to release the throttle pedal and set gear to neutral.

In step 211 the calibration is finished. In an embodiment the control system may activate the parking brake automatically.

In an embodiment of step 212 calibration values, *Brakes contact point current* and brake pressures at this current level *(Service brake pressure, Front brakes pressure* and *Rear brakes pressure)* as well as limit values may be shown to the operator. In an embodiment the operator must accept the values, before these are stored to the control system memory. In an embodiment accepting the values may be possible only, if the values are within allowed range. In an embodiment a log entry with current values may be made if the operator has saved the calibration and the values to the control system memory.

In an embodiment when the gear is set to neutral the transmission stall mode is deactivated.

In an embodiment a log text may be show "Brakes calibrated" in the "Title" field, and the details in "Description" field as following:
"Contact point current " *<Brakes contact point current>* " mA, pressures: Service " *<Service brake pressure>* " bar /
Front " *<Front brakes pressure>* " bar / Rear " *<Rear brakes pressure>* " bar"
For example: Contact point current 500 mA, pressures: Service 95 bar / Front 92 bar / Rear 93 bar

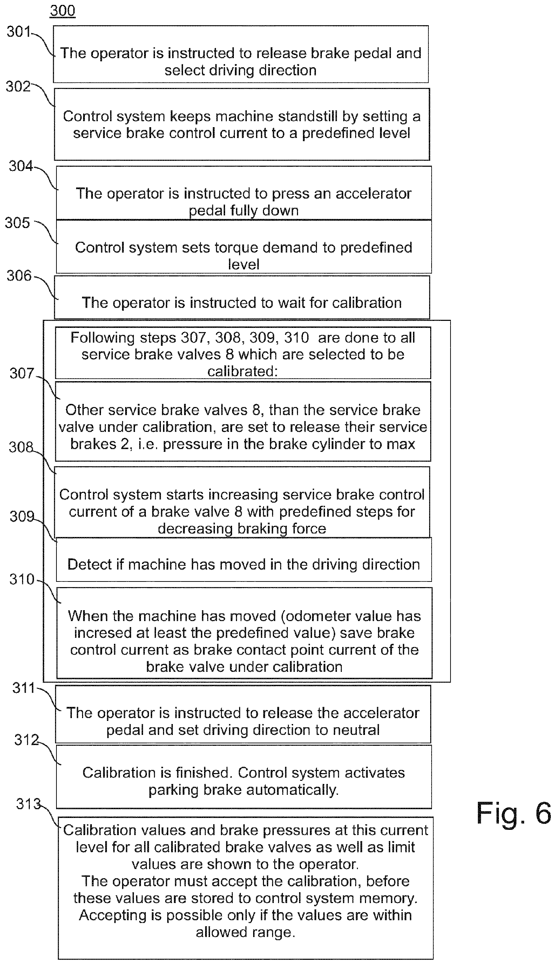

### Example 2: Calibration of brake system with several brake valves 8 (Figure 6)

In an embodiment the service brake system may be provided with several brake valves 8. In an embodiment of Fig. 4 the service brake system is provided with four brake valves 8. In an embodiment of the service brake system a brake valve 8 may be provided for each wheel 20. In an embodiment of Fig. 4 the brake system is provided with separate brake valve 8 for each brake cylinder 16 of a brake release actuator 15. Service brake control at level where service brakes start to contact can be calibrated, separately for all service brake valves 8.

The calibration must not start until parking brakes of the machine 100 are released. The operator should be informed to park the machine 100 in level ground 110 and release the parking brakes. Also, pressure measurement of the calibrated brake valve 8 must be available. Calibration may be cancelled, if parking brake is engaged or brake pedal is pressed *(Brake control request* is above 0%) while calibration control is ongoing. Functions interfering brakes calibration such as neutral brake or hill hold, needs to be disabled during the calibration.

In an embodiment of Figure 6 the service brake calibration may be started by the operator action. The calibration procedure may be cancelled, and reason shown to the operator, if any step takes more time than set in *Brake calibration step timeout,* or interlock conditions are not at satisfactory state (ok) anymore. It may be possible to calibrate only one service brake valve 8 or all service brake valves 8 at the time, with an automatic subsequent sequence.

The service brakes calibration should be possible to do by operator's rights.

An embodiment of a calibration procedure 300 and the operator actions are disclosed in Figure 6:
The operator is instructed in step 301 to release the brake pedal and select a driving direction *(forward* or *reverse* - inputs).

In step 302 the control system keeps machine standstill by setting service brake control current to a predefined level. In an embodiment a parameter *"Service brake control"* is set off. In an embodiment the service brake control current of a brake valve 8 may be set to a predefined value, for example to a minimum value, wherein the control current may be set, for example, to a value of 0 mA.

In an embodiment a next step is executed when the brake pedal is released *(Brake control request =* 0%). In an embodiment the procedure may comprise a plurality of checking steps. In an embodiment a timeout step may be arranged if "Driving direction is not selected" or "Brake pedal is not released" => Cancel calibration and show reason to the operator.

In step 304 the operator is instructed to press an accelerator pedal of the mining machine fully down.

In step 305 the control system sets the torque demand to a predefined level. In an embodiment the parameter "Brake contact point calibration torque" is set as torque demand, for example to drive motor inverters, when the user selects driving direction. In an embodiment inverters may be commanded in a torque mode with an absolute torque demand.

In an embodiment a checking step may be arranged to check if statuses of driving inverters are in predefined limit ranges. In an embodiment a timeout step may be arranged: "Accelerator pedal was not pressed fully down" / "Drive motor torque not reached" or driving direction is set back to neutral => Cancel calibration and show reason. The information and status may be shown to the operator on a display during the calibration process.

In step 306 the operator is instructed to wait for calibration.

The following steps 307, 308, 309, 310 are done to all brake valves 8, which are selected to be calibrated:
In step 307 other service brake valves 8, than the service brake valve 8 under calibration, are set to release their service brakes, i.e. pressure in the brake cylinder to maximum value. In an embodiment this may be done by controlling the brake control current of these other service brake valves to maximum, to release other service brakes.

In step 308 the control system starts increasing the service brakes control current of the brake valve 8 with predefined steps for decreasing braking force and increasing pressure in the brake circuit between the brake valve 8 or the relay valve 21 and the service brakes 2. In an embodiment a value of a variable *"Service brake control"* may be increased, for example linearly and/or gradually. In an embodiment the service brake control current may be increased from minimum current with a parameter *"Brakes calibration step size"* divided by a parameter *"Brakes calibration interval" time.* In step 309 is detected in the driving direction. In an embodiment a measuring device or a sensor may be arranged to detect the movement. In an embodiment a movement in a main moving direction of the mining machine may be detected. In an embodiment an odometer may be arranged to detect the movement. In an embodiment the machine may be detected being moved if a predefined value is reached. In an embodiment the machine is detected moving if a variable "Odometer value" has increased more than a predefined *"Brakes calibration movement" -* limit. According to step 310 if the machine is detected being moved a value of the variable *"Service brake control" current* at this point is saved as *"Brakes contact point current",* for the service brake valve 8 under calibration. In an embodiment a timeout step may be arranged: "Machine movement is not detected, speed sensor failure" or the accelerator pedal is lifted or driving direction is set back to neutral or brake pedal is pressed => Cancel calibration and show reason to the operator.

In step 311 the operator is instructed to release the accelerator pedal and set driving direction to neutral.

In step 312 the calibration is finished. In an embodiment the control system may activate the parking brake automatically.

In an embodiment of step 313 calibration values, *Brakes contact point currents* and brake pressures at this current level, for all calibrated brake valves 8 as well as limit values may be shown to the operator. In an embodiment the operator must accept the values, before these are stored to the control system memory. In an embodiment accepting of the values may be possible only, if the values are within allowed range. In an embodiment a log entry with current values may be made if the operator has saved the calibration and the values to the control system memory.

In an embodiment a log text may be show "Brakes calibrated" in the "Title" field, with location and the details in "Description" field as following:
<location> "contact point current " *<Brakes contact point current>* "mA", with *<Service brake pressure>* bar pressure"

Where possible locations are:
1. Front left
2. Front right
3. Rear left
4. Rear right

For example:
Front left contact point current 500 mA, with 95 bar pressure .

As stated above, the components of the examples can include computer readable medium or memories for holding instructions programmed according to the teachings of the present inventions and for holding data structures, tables, records, and/or other data described herein. Computer readable medium can include any suitable medium that participates in providing instructions to a processor for execution. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Blu-ray Disc, any other suitable optical medium, a RAM, a PROM, an EPROM, a FLASH-EPROM, any other suitable + chip or cartridge, a carrier wave or any other suitable medium from which a computer can read.

It is obvious to a person skilled in the art that with the advancement of technology, the basic idea of the invention may be implemented in various ways. The invention and its embodiments are thus not limited to the examples described above, instead they may vary within the scope of the claims.

### Reference symbols

- 1: Service brake arrangement
- 2: Brake
- 3: Tank
- 4: Pump
- 5: Pressurised fluid conduit
- 6: Tank conduit
- 7: Fluid conduit
- 8: Brake valve
- 9: Control device
- 10: Control line
- 11: Brake valve control receiver
- 12: Brake valve control pressure line
- 13: Measurement device (Pressure sensor)
- 14: Brake fluid line
- 15: Brake actuator cylinder
- 16: Brake release actuator
- 17: Brake spring
- 20: Wheel
- 21: Relay valve
- 22: Relay valve pilot pressure line
- 23: Relay valve control pressure line
- 24: Tank conduit
- 25: Front axle
- 26: Rear axle
- 100: Mining machine
- 110: Ground
- 120: Measurement device (Odometer)
- 122: Processor
- 124: Memory
- CS: Control system

## Claims

1. A service brake calibration arrangement (1) of a mining machine (100) configured to determine a braking point of a service brake system comprising a brake circuit with a fluid source, conduit means for providing fluid to a brake actuator of a brake (2), a brake valve (8) for controlling pressure in the brake circuit, and a control device (9) configured to control the brake valve (8), wherein the calibration arrangement comprising:
a control system (CS) with at least one memory (122) configurated to store computer programs and related data, and at least one processor (124) configured to execute computer programs,
wherein the service brake calibration arrangement, by using the at least one processor and the at least one memory is configured to:
determine the braking point of the service brake valve (8), which braking point is a value of the pressure of the service brake circuit or a value of the control current of the brake valve (8) in which the mining machine (100) is detected to move when the braking force of the brake (2) of at least one wheel (20) of the mining machine (100) is gradually released by the brake valve (8) and when a torque produced by a powertrain of the mining machine (100) is connected to the at least one wheel (20) of the mining machine.

2. The service brake calibration arrangement according to claim 1, wherein the service brake valve (8) is a proportional valve, and the braking point is determined with a control current i.e., a braking current of the brake valve (8).

3. The service brake calibration arrangement according to claim 1 or 2, wherein the control device (9) configured to control the brake valve (8) is a brake pedal.

4. The service brake calibration arrangement according to any one of claims 1 to 3, wherein the brake valve (8) is configured to control pressure in the brake circuit between the brake valve (8) and/or a relay valve (21) and the brake actuator of the service brake (2).

5. The service brake calibration arrangement according to any one of claims 1 to 4, wherein the arrangement comprises a measurement device (120), such as a sensor or an odometer, configured to give an indication when the mining machine (100) is detected moving during calibration.

6. The service brake calibration arrangement according to any one of claims 1 to 5, wherein the arrangement comprises a display device and/or a speaker for giving instructions or status information of the mining machine to an operator.

7. Method for calibration of a service brake of a mining machine (100), wherein the method comprising a step of holding the service brake (2) on for holding the mining machine (100) still,
connecting a power of a powertrain of the mining machine (100) to produce a torque to at least one wheel (20) of the mining machine,
gradually releasing the brake force of the service brake (2),
detecting a movement of the mining machine (100), determining a braking point in which the mining machine is detected moving, and
setting up the braking point in which the mining machine (100) is detected moving as a new calibrated braking point.

8. The method according to claim 7, wherein the braking point determined is a value of a braking current of a brake valve (8) of a service brake system.

9. The method according to claim 7 or 8, wherein the method further comprising a calibration of a control device (9), such as a brake pedal, operationally connected to the brake valve (8) of the service brake system.

10. The method according to any one of claims 7 to 9, wherein the method comprising calibration of each of the brake valves (8) of the service brake system.

11. The method according to claim 10, wherein the method, in case of a plurality of service brake valves (8), comprising a step of setting service brakes (2) off, i.e. released, of those service brakes operationally connected to be controlled by other brake valves than the brake valve (8) operationally connected to a service brake (2) intended to be calibrated.

12. The method according to any one of claims 7 to 11, wherein in the method by using a control system (CS) with at least one processor (122) and at least one memory (124) and at least one measurement device (120) is configured to: determine the braking point of the brake valve (8).

13. The method according to any one of claims 7 to 12, wherein the method comprising a step of instructing an operator of the mining machine (100) to execute at least one or several of the following steps: controlling of a throttle or an acceleration of the powertrain of the mining machine, approving the result of the calibration on service brake (2) before the result is stored as a new calibrated value in the memory (124).

14. The method according to any one of the claims 7 to 13, wherein the method comprising a step of repeating calibration for each of the brake valves (8) operationally connected to at least one service brake (2) until the calibration of all brake valves (8) intended to be calibrated is finished.

15. A mining machine (100) comprising a service brake calibration arrangement (1) according to any one of claims 1 to 6.
